# FASCICULE DE BREVET EUROPEEN

(11) **EP 4 508 488 B1**
(45) Date de publication et mention de la délivrance du brevet: **18.03.2026**
(21) Numéro de dépôt: 23717948.6
(22) Date de dépôt: 11.04.2023
(51) Int. Cl.: G02F 1/1335, G02F 1/13357, G02B 19/00

(54) **DISPOSITIF DE RETRO-ECLAIRAGE ET GENERATEUR D'IMAGES**
HINTERGRUNDBELEUCHTUNGSVORRICHTUNG UND BILDGENERATOR
BACKLIGHTING DEVICE AND IMAGE GENERATOR

(30) Priorité: 15.04.2022 FR 2203552
(43) Date de publication de la demande: 19.02.2025
(73) Titulaire: Valeo Comfort and Driving Assistance, 94000 Créteil (FR)
(72) Inventeur: KLECKNER, Alexis, 94000 Créteil (FR); HUSSON, Arnaud, 94000 Créteil (FR); BEN-NACHOUANE, Ayoub, 94000 Créteil (FR)
(74) Mandataire: Delplanque, Arnaud
(86) Numéro de dépôt international: PCT/EP2023/059448
(87) Numéro de publication internationale: WO 2023/198716

(56) Documents cités:
- EP-A1- 3 663 834
- US-A1- 2006 007 553

## Description

### DOMAINE TECHNIQUE DE L'INVENTION

La présente invention concerne de manière générale les systèmes d'affichage.

Elle concerne plus particulièrement dispositif de rétro-éclairage pour un tel système d'affichage.

L'invention trouve une application particulièrement avantageuse dans les systèmes d'affichage tête-haute embarqués dans les véhicules automobiles.

### ETAT DE LA TECHNIQUE

Pour faciliter la conduite d'un véhicule automobile, on connaît des systèmes d'affichage tête-haute comprenant un générateur d'images et un système optique configuré pour projeter les images sur une surface partiellement transparente telle que le parebrise du véhicule. US2006/007553 A1 divulgue un tel système d'affichage tête-haute.

Classiquement, le générateur d'images comprend un écran, par exemple un écran à cristaux liquides et un dispositif de rétro-éclairage situé à l'arrière de l'écran.

On connaît des dispositifs de rétro-éclairage comprenant une pluralité de sources lumineuses éclairant un diffuseur. Afin d'augmenter la quantité de lumière atteignant le diffuseur, ces dispositifs de rétro-éclairage comprennent classiquement un réflecteur formant, autour de chaque source lumineuse, une cavité évasée guidant la lumière vers le diffuseur. Le réflecteur forme ainsi un réseau de cavités régulières. Pour que le diffuseur soit éclairé de façon homogène, le réflecteur s'étend généralement à distance du diffuseur.

Toutefois, l'espacement entre le réflecteur et le diffuseur conduit à un échappement de certains rayons lumineux et donc à une baisse globale de l'efficacité du dispositif de rétro-éclairage.

### PRESENTATION DE L'INVENTION

Dans ce contexte, la présente invention propose un dispositif de rétro-éclairage pour générateur d'images comprenant :
- une pluralité de sources lumineuses conçues pour générer chacune un faisceau lumineux ;
- un diffuseur s'étendant en regard de la pluralité de sources lumineuses ; et
- un réflecteur comprenant des parois s'élevant entre la pluralité de sources lumineuses et le diffuseur,

les parois formant des cavités autour des sources lumineuses de sorte à réfléchir au moins en partie les faisceaux lumineux vers le diffuseur,
lesdites parois comprenant des parois périphériques entourant la pluralité de sources lumineuses et au moins une paroi interne séparant deux cavités,
les parois périphériques s'étendant à une distance de confinement du diffuseur la paroi interne s'étendant à une distance de jointure du diffuseur, la distance de jointure étant supérieure à la distance de confinement.

Ainsi, grâce à l'invention, d'une part la distance de confinement permet de réduire l'échappement rayons lumineux et, d'autre part, la distance de jointure permet d'assurer un éclairage homogène de la région centrale du diffuseur. En effet, les parois périphériques étant plus hautes que les parois internes, elles confinent les faisceaux lumineux dans le dispositif de rétro-éclairage. Il est donc possible, pour obtenir un éclairement du diffuseur équivalent au dispositifs de l'art antérieur, de réduire l'intensité des sources lumineuses et donc de générer moins de pertes thermiques.

Par conséquent, l'invention propose un réflecteur qui permet d'optimiser à la fois l'efficacité et l'homogénéité de l'éclairage au niveau du diffuseur.

D'autres caractéristiques avantageuses et non limitatives du dispositif de rétro-éclairage conforme à l'invention, prises individuellement ou selon toutes les combinaisons techniquement possibles, sont les suivantes :
- la distance de jointure est suffisamment grande pour que les faisceaux lumineux générés par deux sources lumineuses situées respectivement dans deux cavités adjacentes s'intersectent sur le diffuseur ;
- la distance de confinement est nulle ;
- les parois s'élèvent sur une hauteur comprise entre 10 mm et 40 mm ;
- chaque cavité est formée autour de seulement deux sources lumineuses ;
- chaque source lumineuse génère un faisceau lumineux éclairant une portion du diffuseur dont la surface est supérieure à 3 cm² ;
- le dispositif de rétro-éclairage comprend un polariseur réflectif s'étendant en regard du diffuseur et à l'opposé des sources lumineuses par rapport au réflecteur ;
- le dispositif de rétro-éclairage comprend une couche au moins partiellement réfléchissante s'étendant à la base de la pluralité de sources lumineuses.

L'invention propose également un générateur d'images comprenant un écran éclairé par un dispositif de rétro-éclairage tel que décrit ci-dessus.

Selon une caractéristique envisageable, le générateur d'images comprend un dissipateur thermique en contact avec un pourtour de l'écran.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue en coupe d'un exemple de générateur d'images selon l'invention ;
[Fig. 2] est une vue de dessus d'une partie d'un exemple de dispositif de rétro-éclairage selon l'invention qui comprend des sources lumineuses et un réflecteur ;
[Fig. 3] est une vue en perspective du réflecteur de la figure 2 ;
[Fig. 4] est une vue éclatée en coupe, suivant le plan AA, d'un générateur d'images selon une variante de réalisation de l'invention qui comprend le dispositif de rétro-éclairage de la figure 2.

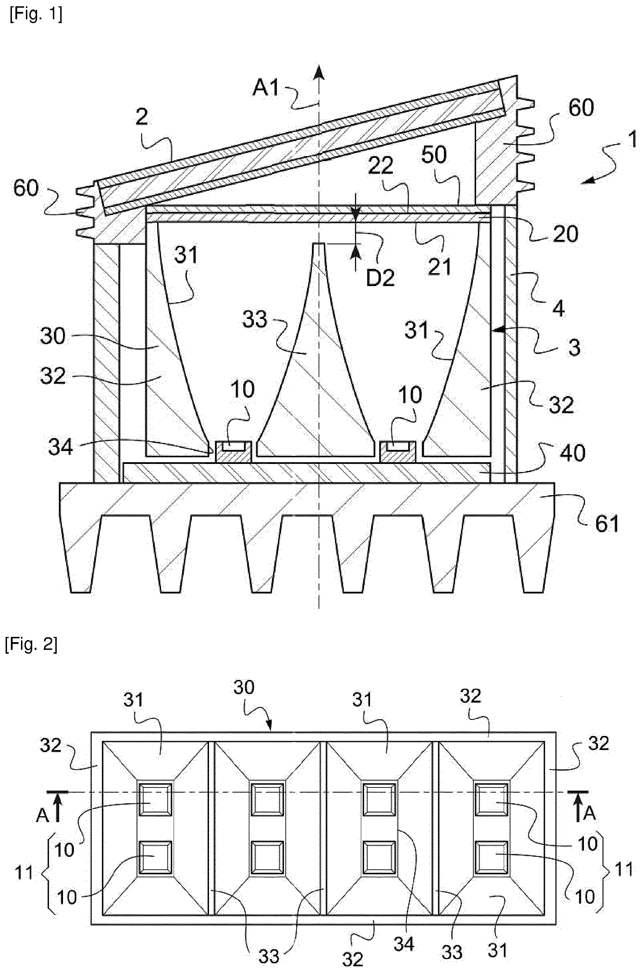

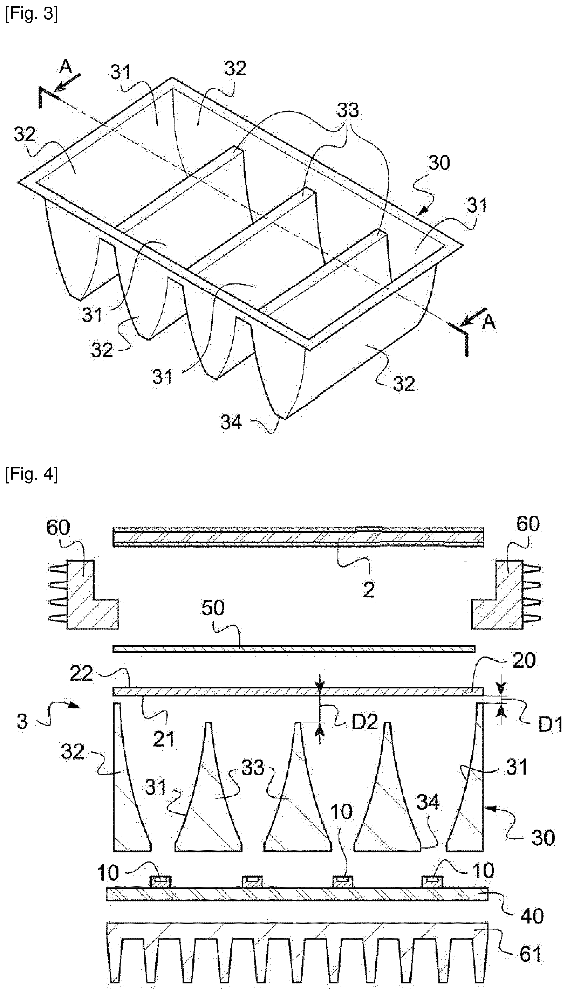

Sur les figures 1 et 4, on a représenté un générateur d'images 1 comprenant un écran 2 et un dispositif de rétro-éclairage 3 situé à l'arrière de l'écran 2. Comme le montre la figure 1, le générateur d'images 1 comprend aussi une structure support 4 qui maintient les différents éléments du générateur d'images 1, notamment l'écran 2 et le dispositif de rétro-éclairage 3.

Le générateur d'images 1 est prévu pour faire partie d'un système d'affichage tête-haute au sein d'un véhicule automobile. Le générateur d'images 1 est ainsi par exemple intégré au tableau de bord du véhicule, par exemple à l'arrière du volant. Le système d'affichage tête-haute comprend aussi un système optique qui, en coopération avec le générateur d'images 1, permet de projeter sur une surface partiellement réfléchissante (typiquement sur le parebrise) des images représentatives par exemple de certains paramètres de conduite du véhicule.

Classiquement, l'écran 2 est ici un écran à cristaux liquides dont les faces d'entrée et de sortie comprennent chacune un polariseur.

Comme le montre la figure 1, le dispositif de rétro-éclairage 3 comprend :
- une pluralité de sources lumineuses 10 conçues pour générer chacune un faisceau lumineux ;
- un diffuseur 20 s'étendant en regard de la pluralité de sources lumineuses 10 ; et
- un réflecteur 30 formant des cavités 31 autour des sources lumineuses 10 de sorte à réfléchir les faisceaux lumineux vers le diffuseur 20.

Le dispositif de rétro-éclairage 3 comprend plus spécifiquement un circuit imprimé 40 sur lequel sont disposées les sources lumineuses 10. Le circuit imprimé 40 permet de fournir un courant électrique aux sources lumineuses 10. Les sources lumineuses 10 sont ici des diodes électroluminescentes.

Comme cela apparait sur la figure 2, les sources lumineuses 10 sont ici disposées sur le circuit imprimé 40 selon des lignes et des colonnes de manière à former des groupes 11. Dans l'exemple de la figure 2, huit sources lumineuses 10 sont ainsi disposées sur deux lignes et quatre colonnes de manière à former quatre groupes 11 de deux sources lumineuses 10. Sur la figure 4, une source lumineuse 10 de chaque groupe 11 de la figure 2 est représentée en coupe.

Chaque groupe 11 comprend au moins deux sources lumineuses 10, par exemple de deux à quatre sources lumineuses 10. Les sources lumineuses 10 d'un même groupe 11 sont généralement plus proches les unes des autres que d'une source lumineuse 10 d'un autre groupe 11. Comme expliqué par la suite, les sources lumineuses 10 d'un même groupe 11 sont ici caractérisées par le fait d'être associées à une même cavité.

Comme illustré sur les figures 1 et 4, le diffuseur 20 s'étend en face des sources lumineuses 10 de manière à être éclairé par ces dernières. Le diffuseur 20 présente une forme de plaque qui s'étend ici sensiblement parallèlement au circuit imprimé 40. Le diffuseur 20 est ici un diffuseur holographique réalisé en polycarbonate. Le diffuseur 20 présente une épaisseur qui est par exemple comprise entre 0,1 mm et 0,6 mm.

Comme le montre bien la figure 4, le diffuseur 20 présente deux faces principales opposées : une face arrière 21 orientée vers les sources lumineuses 10 et une face avant 22 orientée vers l'écran 2.

Le diffuseur 20 est ainsi agencé de telle sorte que la face arrière 21 reçoive, ici directement, au moins une partie des faisceaux lumineux émis par les sources lumineuses 10. On entend ici par « directement » que les faisceaux lumineux ne traversent aucun autre élément optique avant d'atteindre la face arrière 21 du diffuseur 20. On considère aussi que les faisceaux lumineux réfléchis par le réflecteur 30 parviennent « directement » au diffuseur 20.

En diffusant à travers le diffuseur 20, les faisceaux lumineux génèrent au niveau de la face avant 21 un faisceau lumineux secondaire étendu, ce qui permet d'éclairer l'écran 2. Le diffuseur 20 présente des angles de diffusion, pour un faisceau collimaté arrivant perpendiculairement au diffuseur 20, qui sont par exemple compris entre 10 degrés et 50 degrés.

Comme le montrent les figures 1 et 4, le réflecteur 30 est interposé entre le circuit imprimé 40 et le diffuseur 20, et donc entre la pluralité de sources lumineuses 10 et le diffuseur 20.

Le réflecteur 30 comprend des parois 32, 33 qui délimitent des cavités 31 autour des sources lumineuses 10. Comme le montre bien la figure 2, chaque cavité 31 est formée autour d'un unique groupe 11 de sources lumineuses 10. Chaque cavité 31 est plus particulièrement centrée sur cet unique groupe 11 de sources lumineuses 10.

Ici, comme le montre bien la figure 2, chaque cavité 31 est formée autour de seulement deux sources lumineuses. Des groupes 11 de deux sources lumineuses 10 permettent de limiter le nombre de cavités 31 du réflecteur 30, ce qui, comme expliqué par la suite, augmente l'homogénéité du faisceau lumineux secondaire, tout en gardant des cavités 31 de taille suffisamment réduite pour exploiter efficacement leur effet réflecteur.

Pour guider les faisceaux lumineux vers le diffuseur 20, les cavités 31 sont évasées dans le sens où elles s'élargissent depuis les sources lumineuses 10 en direction du diffuseur 20. Pour guider les faisceaux lumineux vers le diffuseur 20, les parois 32, 33 délimitant les cavités 31 sont réfléchissantes. Le réflecteur 30 est ici réalisé dans un matériau plastique sur lequel est déposé une couche mince métallique, par exemple en aluminium ou en argent. En variante, le réflecteur peut être intégralement réalisé en matériau métallique.

Les parois 32, 33 s'élèvent entre le circuit imprimé 40 et le diffuseur 20, et donc entre la pluralité de sources lumineuses 10 et le diffuseur 20. Toutefois, comme cela apparait bien sur la figure 1, les parois 32, 33 ne sont en contact direct ni avec le circuit imprimé 40 ni avec les sources lumineuses 10 pour éviter tout court-circuit. On entend donc par le fait qu'une cavité 31 est formée « autour » d'un groupe 11 qu'elle est ajustée à proximité de ce dernier tout en surplombant légèrement le circuit imprimé 40, par exemple d'une distance comprise entre 0,2 mm et 0,7 mm.

Comme le montre la figure 1, l'extrémité supérieure d'une source lumineuse 10, à l'opposé du circuit imprimé 40, peut tout de même être située dans la cavité 31 associée. Ainsi, les cavités 31 présentent ici des ouvertures d'entrée 34 au niveau desquelles sont situées les sources lumineuses 10.

Les parois 32, 33 sont plus spécifiquement soit des parois périphériques 32, soit des parois internes 33.

Les parois périphériques 32 entourent la pluralité de sources lumineuses 10 dans le sens où, mises bout-à-bout, les parois périphériques 32 entourent la totalité des sources lumineuses 10 du dispositif de rétro-éclairage 3. Comme le montre la figure 2, cela signifie qu'une paroi périphérique 32 ne s'étend pas entre deux sources lumineuses 10. Dans les exemples illustrés sur les figures, les parois périphériques 32 surplombent un pourtour rectangulaire du circuit imprimé 40. Les parois périphériques 32 entourent, ici encadrent, donc toutes les sources lumineuses 10.

D'un autre côté, les parois internes 33 s'étendent entre les sources lumineuses 10. Chaque paroi interne 33 s'étend plus particulièrement entre au moins deux groupes 11 adjacents, c'est-à-dire situés côte-à-côte. En d'autres termes, chaque paroi interne 33 sépare au moins deux cavités 31 adjacentes. Ici, les parois internes 33 s'étendent d'une paroi périphérique 32 à une autre paroi périphérique 32.

On observe bien sur la vue en perspective de la figure 3, que les parois internes 33 s'élèvent ainsi au milieu ou à l'intérieur du réflecteur 30, par opposition aux parois périphériques 32 qui s'élèvent en périphérie du réflecteur 30.

A titre d'exemple, le réflecteur 30 illustré sur les figures 2 et 3 comprend quatre parois périphériques 32 entourant les quatre cavités 31 et trois parois internes 33 séparant les quatre cavités 31. Toujours à titre d'exemple, le réflecteur 30 peut comprendre une unique paroi interne 32, comme représenté sur la figure 1, séparant par exemple deux groupes 11 de deux sources lumineuses 10. Encore à titre d'exemple, les parois internes 33 peuvent s'étendre dans plusieurs directions, typiquement selon deux directions perpendiculaires, de manière à former une matrice de cavités 31 selon plusieurs lignes et plusieurs colonnes.

Comme illustré en figure 4, les parois périphériques 32 s'étendent à une distance de confinement D1 du diffuseur 20 et chaque paroi interne 32 s'étend à une distance de jointure D2 du diffuseur 20.

De façon remarquable, la distance de jointure D2 est supérieure à la distance de confinement D1.

En d'autres termes, vue depuis la pluralité de sources lumineuses 10, la hauteur des parois internes 33 est plus petite que la hauteur des parois périphériques 32. On entend ici par « hauteur » la dimension des parois 32, 33 selon un axe A1 perpendiculaire au circuit imprimé 40 et au diffuseur 20 qui correspond ici à la direction principale d'émission des sources lumineuses 10. Ici, les parois internes 33 et les parois périphériques 32 s'étendent à la même distance du circuit imprimé 40 telles que représentées sur les figures 1 et 4. Ici, les parois 32, 33 s'élèvent sur une hauteur comprise entre 10 mm et 40 mm.

Cette différence de hauteur entre les parois périphériques 32, plus hautes, et les parois internes 33, plus basses, est particulièrement visible sur la figure 2.

Avantageusement, la distance de jointure D2 est suffisamment grande pour que les faisceaux lumineux générés par deux sources lumineuses 10 situées respectivement dans deux cavités 31 adjacentes s'intersectent sur le diffuseur 20. En d'autres termes, la distance de jointure D2 est telle que les faisceaux lumineux issues de deux cavités 31 adjacentes s'intersectent, avant ou après réflexion dans lesdites cavités 31, sur ou avant le diffuseur 20. La distance de jointure D2 est par exemple comprise entre 0,2 mm et 10 mm.

De préférence, la distance de jointure D2 est suffisamment grande pour que des rayons lumineux se propageant en ligne droite, c'est-à-dire sans réflexion sur les parois 32, 33 du réflecteur 20, générés par deux sources lumineuses 10 situées respectivement dans deux cavités 31 adjacentes s'intersectent sur le diffuseur 20.

Grâce à la distance de jointure D2, le faisceau lumineux secondaire généré est uniforme et homogène dans le sens où les séparations entre les cavités 31, c'est-à-dire les parois internes 33, ne sont pas visibles depuis l'écran 2. En effet, les régions du diffuseur 20 surplombant les parois internes 30 sont tous de même éclairés par les sources lumineuses 10.

La distance de confinement D1 est (strictement) inférieure à la distance de jointure D2, ce qui permet de confiner les faisceaux lumineux dans le dispositif de rétro-éclairage 3. La hauteur des parois périphériques 33 limite en effet la quantité de lumière pouvant s'échapper avant d'arriver sur le diffuseur 20.

La figure 1 illustre un dispositif de rétro-éclairage 2 dans le cas limite où la distance de confinement D1 est nulle. La face arrière 21 du diffuseur 20 est alors en contact avec les parois périphériques 33. Les faisceaux lumineux sont alors efficacement confinés à l'intérieur du réflecteur 30, entre le circuit imprimé 40 et le diffuseur 20.

Ainsi, de façon générale, la structure du réflecteur 20 selon l'invention permet d'augmenter la compacité du dispositif de rétro-éclairage 3 tout en produisant un faisceau lumineux secondaire homogène pour éclairer l'écran 2. Elle rend aussi le dispositif de rétro-éclairage 3 efficace sur le plan énergétique puisqu'elle augmente la quantité de lumière atteignant le diffuseur 20.

De façon remarquable, la structure du réflecteur 20, combinée à l'agencement en groupe des sources lumineuses 10, permet d'utiliser un nombre de sources lumineuses 10 réduit. En effet, le dispositif de rétro-éclairage 3 est ici conçu de telle sorte que chaque source lumineuse 10 génère un faisceau lumineux éclairant une portion du diffuseur 20 dont la surface est supérieure à 3 cm² et de préférence supérieure à 5 cm². Ainsi, lorsque la taille de l'écran 2 est comprise entre 2 pouces et 5 pouces (en diagonal), le dispositif de rétro-éclairage 3 peut comprendre seulement huit diodes électroluminescentes, comme illustrés sur les figures 2 et 4, et produire un rétro-éclairage suffisamment intense et homogène pour le système d'affichage tête-haute.

De plus, le dispositif de rétro-éclairage 3 tel qu'illustré sur les figures, et donc aussi le générateur d'images 1, présente ici au moins un plan de symétrie, ce qui donne une grande liberté d'intégration dans le véhicule, il peut par exemple être installé au choix à gauche ou à droite du volant.

Comme le montrent les figures 1 et 4, un polariseur réflectif 50 s'étend en regard du diffuseur 20 et à l'opposé des sources lumineuses 10 par rapport au réflecteur 30. Le polariseur réflectif 50 s'étend ainsi du côté du diffuseur 20, en vis-à-vis de ce dernier. Le polariseur réflectif 50 présente une forme de plaque s'étendant sensiblement parallèlement au diffuseur 20.

Le polariseur réflectif 50 est ici plus spécifiquement situé en vis-à-vis de la face avant 22 du diffuseur 20. Le polariseur réflectif 50 peut être au contact de la face avant 22 tel que représenté sur la figure 1, par exemple au contact optique de cette dernière ou collé à cette dernière au moyen d'une colle optique, ou être à distance de la face avant 22.

Le polariseur réflectif 50 assure un effet de recyclage de la lumière produite par les sources lumineuses 10, c'est-à-dire des faisceaux lumineux. La lumière produite par les sources lumineuses 10 étant ici non polarisée, la moitié de la lumière n'ayant pas la polarisation adaptée est réfléchie par le polariseur réflectif 50 vers les cavités 31. Cette moitié va alors se réfléchir dans les cavités 31, ce qui change en partie sa polarisation (de façon aléatoire) en et augmente donc la probabilité qu'elle puisse par la suite, i.e. après réflexion dans les cavités 31, traverser le polariseur réflectif 50. Ainsi, en orientant le polariseur réflectif 50 selon la même polarisation que la face d'entrée de l'écran 2, la quantité de lumière passant à travers l'écran 2 est augmentée. Cela diminue aussi la quantité de lumière absorbée par l'écran 2 et donc son échauffement.

Avantageusement, le dispositif de rétro-éclairage 3 comprend une couche au moins partiellement réfléchissante s'étendant à la base des sources lumineuses 10. Cette couche permet d'augmenter l'effet de recyclage en réfléchissant une partie de la lumière recyclée qui passe par les ouvertures d'entrée 34.

Ici, cette couche est le support du circuit imprimé 40 lui-même qui, au lieu d'être réalisé classiquement dans un matériau vert, est réalisé dans un matériau blanc. En variante, la couche est une pièce additionnelle disposée sur le circuit imprimé et qui comprend une pluralité d'orifices, chaque source lumineuse étant disposée dans un orifice.

Comme le montre la figure 1, le générateur d'image 1 comprend aussi un premier dissipateur thermique 60 en contact avec l'écran 2 et plus spécifiquement avec un pourtour de l'écran 2. Ce contact avec l'écran 2 assure un refroidissement efficace de ce dernier. Le premier dissipateur thermique 60 est ici réalisé en matériau plastique et comprend des fibres de carbones. Comme cela apparait sur la figure 1, le premier dissipateur thermique 60 participe aussi au maintien de l'écran 2.

Le générateur d'image 1 comprend aussi un deuxième dissipateur thermique 61 en contact avec le circuit imprimé 40. Le deuxième dissipateur thermique 61 permet notamment d'évacuer la chaleur produite par les sources lumineuses 10.

La présente invention n'est nullement limitée aux modes de réalisation décrits et représentés, mais l'homme du métier saura y apporter toute variante conforme à l'invention.

## Revendications

1. Dispositif de rétro-éclairage (3) pour générateur d'images (1) comprenant :
- une pluralité de sources lumineuses (10) conçues pour générer chacune un faisceau lumineux ;
- un diffuseur (20) s'étendant en regard de la pluralité de sources lumineuses (10) ; et
- un réflecteur (30) comprenant des parois (32, 33) s'élevant entre la pluralité de sources lumineuses (10) et le diffuseur (20),
les parois (32, 33) formant des cavités (31) autour des sources lumineuses (10) de sorte à réfléchir au moins en partie les faisceaux lumineux vers le diffuseur (20),
lesdites parois (32, 33) comprenant des parois périphériques (32) entourant la pluralité de sources lumineuses (10) et au moins une paroi interne (33) séparant deux cavités (31),
**caractérisé en ce que** les parois périphériques (32) s'étendent à une distance de confinement (D1) du diffuseur (20) et **en ce que** la paroi interne (33) s'étend à une distance de jointure (D2) du diffuseur (20), la distance de jointure (D2) étant supérieure à la distance de confinement (D1).

2. Dispositif de rétro-éclairage (3) selon la revendication 1, dans lequel la distance de jointure (D2) est suffisamment grande pour que les faisceaux lumineux générés par deux sources lumineuses (10) situées respectivement dans deux cavités (31) adjacentes s'intersectent sur le diffuseur (20).

3. Dispositif de rétro-éclairage (3) selon la revendication 1 ou 2, dans lequel la distance de confinement (D1) est nulle.

4. Dispositif de rétro-éclairage (3) selon l'une des revendications 1 à 3, dans lequel les parois (32, 33) s'élèvent sur une hauteur comprise entre 10 mm et 40 mm.

5. Dispositif de rétro-éclairage (3) selon l'une des revendications 1 à 4, dans lequel chaque cavité (31) est formée autour de seulement deux sources lumineuses (10).

6. Dispositif de rétro-éclairage (3) selon l'une des revendications 1 à 5, dans lequel chaque source lumineuse (10) génère un faisceau lumineux éclairant une portion du diffuseur (20) dont la surface est supérieure à 3 cm².

7. Dispositif de rétro-éclairage (3) selon l'une des revendications 1 à 6, comprenant un polariseur réflectif (50) s'étendant en regard du diffuseur (20) et à l'opposé des sources lumineuses (10) par rapport au réflecteur (30).

8. Dispositif de rétro-éclairage (3) selon l'une des revendications 1 à 7, comprenant une couche au moins partiellement réfléchissante s'étendant à la base de la pluralité de sources lumineuses (10).

9. Générateur d'images (1) comprenant un écran (2) éclairé par un dispositif de rétro-éclairage (3) selon l'une des revendications 1 à 9.

10. Générateur d'images (1) selon la revendication 9, comprenant un dissipateur thermique (60) en contact avec un pourtour de l'écran (2).

## Patentansprüche

1. Hintergrundbeleuchtungsvorrichtung (3) für einen Bildgenerator (1), umfassend:
- eine Vielzahl von Lichtquellen (10), die jeweils zur Erzeugung eines Lichtstrahls ausgelegt sind;
- einen Diffusor (20), der sich gegenüber der Vielzahl von Lichtquellen (10) erstreckt; und
- einen Reflektor (30) mit Wänden (32, 33), die sich zwischen der Vielzahl von Lichtquellen (10) und dem Diffusor (20) erheben,
wobei die Wände (32, 33) Hohlräume (31) um die Lichtquellen (10) herum bilden, um die Lichtstrahlen zumindest teilweise zum Diffusor (20) hin zu reflektieren,
wobei die Wände (32, 33) Umfangswände (32), die die Vielzahl von Lichtquellen (10) umgeben, und mindestens eine Innenwand (33) umfassen, die zwei Hohlräume (31) voneinander trennt,
**dadurch gekennzeichnet, dass** sich die Umfangswände (32) in einem Begrenzungsabstand (D1) vom Diffusor (20) erstrecken und dass sich die Innenwand (33) in einem Verbindungsabstand (D2) vom Diffusor (20) erstreckt, wobei der Verbindungsabstand (D2) größer ist als der Begrenzungsabstand (D1).

2. Hintergrundbeleuchtungsvorrichtung (3) nach Anspruch 1, wobei der Verbindungsabstand (D2) groß genug ist, dass sich die von zwei Lichtquellen (10), die sich jeweils in zwei benachbarten Hohlräumen (31) befinden, erzeugten Lichtstrahlen auf dem Diffusor (20) schneiden.

3. Hintergrundbeleuchtungsvorrichtung (3) nach Anspruch 1 oder 2, wobei der Begrenzungsabstand (D1) null ist.

4. Hintergrundbeleuchtungsvorrichtung (3) gemäß einem der Ansprüche 1 bis 3, wobei die Wände (32, 33) eine Höhe zwischen 10 mm und 40 mm aufweisen.

5. Hintergrundbeleuchtungsvorrichtung (3) gemäß einem der Ansprüche 1 bis 4, wobei jeder Hohlraum (31) nur um zwei Lichtquellen (10) herum ausgebildet ist.

6. Hintergrundbeleuchtungsvorrichtung (3) nach einem der Ansprüche 1 bis 5, wobei jede Lichtquelle (10) einen Lichtstrahl erzeugt, der einen Teil des Diffusors (20) beleuchtet, dessen Fläche größer als 3 cm² ist.

7. Hintergrundbeleuchtungsvorrichtung (3) nach einem der Ansprüche 1 bis 6, mit einem reflektierenden Polarisator (50), der sich gegenüber dem Diffusor (20) und gegenüber den Lichtquellen (10) in Bezug auf den Reflektor (30) erstreckt.

8. Hintergrundbeleuchtungsvorrichtung (3) nach einem der Ansprüche 1 bis 7, mit einer zumindest teilweise reflektierenden Schicht, die sich an der Basis der mehreren Lichtquellen (10) erstreckt.

9. Bildgenerator (1) mit einem Bildschirm (2), der von einer Hintergrundbeleuchtungseinrichtung (3) gemäß einem der Ansprüche 1 bis 8 beleuchtet wird.

10. Bildgenerator (1) gemäß Anspruch 9, umfassend einen Kühlkörper (60), der mit einem Umfang des Bildschirms (2) in Kontakt steht.

## Claims

1. A backlighting device (3) for an image generator (1) comprising:
- a plurality of light sources (10), each designed to generate a light beam;
- a diffuser (20) arranged in front of the plurality of light sources (10); and
- a reflector (30) comprising walls (32, 33) arranged between the plurality of light sources (10) and the diffuser (20),
the walls (32, 33) forming cavities (31) around the light sources (10) so as to at least partially reflect the light beams toward the diffuser (20),
said walls (32, 33) comprising peripheral walls (32) surrounding the plurality of light sources (10) and at least one inner wall (33) separating two cavities (31),
**characterized in that** the peripheral walls (32) extend to a confinement distance (D1) from the diffuser (20), and **in that** the inner wall (33) extends to a joining distance (D2) from the diffuser (20), the joining distance (D2) being greater than the confinement distance (D1).

2. The backlighting device (3) as claimed in claim 1, wherein the joining distance (D2) is large enough that the light beams generated by two light sources (10) located respectively in two adjacent cavities (31) intersect on the diffuser (20).

3. The backlighting device (3) as claimed in claim 1 or 2, wherein the confinement distance (D1) is zero.

4. The backlighting device (3) as claimed in one of claims 1 to 3, wherein the height of the walls (32, 33) is between 10 mm and 40 mm.

5. The backlighting device (3) as claimed in one of claims 1 to 4, wherein each cavity (31) is formed around two light sources (10) only.

6. The backlighting device (3) as claimed in one of claims 1 to 5, wherein each light source (10) generates a light beam illuminating a portion of the diffuser (20) having a surface area greater than 3 cm².

7. The backlighting device (3) as claimed in one of claims 1 to 6, comprising a reflective polarizer (50) arranged in front of the diffuser (20) and opposite the light sources (10) with respect to the reflector (30).

8. The backlighting device (3) as claimed in one of claims 1 to 7, comprising an at least partially reflective layer extending at the base of the plurality of light sources (10).

9. An image generator (1) comprising a screen (2) illuminated by a backlighting device (3) as claimed in one of claims 1 to 8.

10. The image generator (1) as claimed in claim 9, comprising a heat sink (60) in contact with a periphery of the screen (2).
